Europäisches Patentamt

European Patent Office

Office européen des brevets

(19)

(11) Publication number: **0 308 144**
**A1**

# EUROPEAN PATENT APPLICATION

(21) Application number: 88308353.7

(22) Date of filing: 09.09.88

(51) Int. Cl.⁴: **B25B 21/00 , B21J 15/26**

(30) Priority: 18.09.87 GB 8721963

(43) Date of publication of application:
22.03.89 Bulletin 89/12

(84) Designated Contracting States:
AT BE CH DE ES FR GB GR IT LI LU NL SE

(71) Applicant: AVDEL SYSTEMS LIMITED
Mundells
Welwyn Garden City Hertfordshire AL7
1EZ(GB)

(72) Inventor: Lacey, Raymond Dennis The Bee
House
Hanbury Lane
Essendon Hertfordshire(GB)

(74) Representative: Treacher, Alan Leslie
P.O. Box 154
Welwyn Garden City Hertfordshire AL7
1LW(GB)

(54) Apparatus for installing fasteners.

(57) A tool for installing fasteners of the type well-known under the trademarks JO-BOLT and COMP-TITE, and comprising a body and a stem, the stem being provided with wrenching faces spaced apart across the stem and by which it can be driven to rotate with respect to the body thereby to install the fastener, which tool comprises:-a stationary radially outer hexagonal socket (23) for engaging the body of a fastener to be installed, and a radially inner wrench (2a), rotatable with respect to the outer socket, and including a recess (31) formed with driving faces spaced apart across its recess to drivingly engage with the wrenching faces of a fastener stem received within the recess so that the tool can install different fasteners having wrenching faces on their stems which are spaced apart across the stem by respectively different distances, the recess (31) is formed with a plurality of sets of driving faces(35a, 35b).

Fig.3A.

## APPARATUS FOR INSTALLING FASTENERS

The invention relates to apparatus for installing fasteners of the type comprising a body and a stem, the stem being provided with wrenching faces spaced apart across the stem and by which it can be driven to rotate with respect to the body thereby to instal the fastener, which apparatus comprises:-
a radially outer part for engaging the body of a fastener to be installed;
and a radially inner part, rotatable with respect to the outer part, and including a recess formed with driving faces spaced apart across the recess to drivingly engage with the wrenching faces of a fastener stem received within the recess.

One example of a fastener of this type is widely available under the registered trademark JO-BOLT. The stem is externally threaded and has a head at the end remote from the wrenching faces. The body is internally threaded to match the stem on which it is assembled with an expandible sleeve assembled between the stem head and a tapered nose on the body. A body head at the end remote from the nose carries wrenching faces for engagement with wrenching faces on the radially outer part of the installation apparatus. When the stem is rotated with respect to the body so as to drive the stem head towards the body nose, the sleeve is radially expanded to form a blind head. This co-operates with the body head to secure together two or more workpieces.

Such fasteners are generally known as blind bolts, and are normally supplied in a range of standard diameters, i.e. standard outside body diameters. The body head may be hexagonal in form, having an external hexagonal configuration of body wrenching flats, or countersunk in form, having a recessed radially extending body wrenching flats configuration. Normally all blind bolts of the same body diameter and body wrenching flats configuration, also have body head size, stem diameter and stem wrenching flats configuration respectively the same. Thus the same installation tool will instal all blind bolts of the same body diameter and wrenching flat configuration.

Recent developments in alternative forms of blind head formation have necessitated a reduction in the diameter of stem used with a given body diameter, with a consequent reduction in the spacing apart of the stem wrenching flats. Thus in order to instal both varieties of blind bolt having the same body wrenching flat configuration, two separate installation tools (or the adaptation and re-adaptation of the same tool) are required. This is unacceptable to the user, and there is thus a requirement for a single installation tool which will instal fasteners having different stem diameters and stem wrenching flat spacings.

Accordingly, the present invention provides apparatus for installing fasteners of the type comprising a body and a stem, the stem being provided with wrenching faces spaced apart across the stem and by which it can be driven to rotate with respect to the body thereby to instal the fastener, which apparatus comprises:
a radially outer part for engaging the body of a fastener to be installed;
and a radially inner part, rotatable with respect to the outer part, and including a recess formed with driving faces spaced apart across the recess to drivingly engage with the wrenching faces of a fastener stem received within the recess;
in which the recess is formed with a plurality of sets of driving faces, the driving faces of each set being spaced apart from each other across the recess by a distance which decreases as the distance of the set of driving faces from the entrance to the recess increases, whereby the same installation apparatus can drivingly engage with a plurality of fasteners having wrenching faces on their stems which are spaced apart across the stem by respectively different distances.

Preferably the radially inner part of the apparatus is axially movable with respect to the outer part. Preferably the radially inner part is resiliently urged towards the stem of a fastener to be received in its recess.

The invention includes apparatus as aforesaid for installing fasteners in which the stem is externally threaded and carries wrenching faces in the form of a pair of opposed parallel flats joined at their edges by arcuate faces which are externally threaded, in which apparatus each set of driving faces comprises two opposed parallel flats, the flats being joined at their edges by arcuate faces which are a clearance around the aforesaid externally threaded arcuate faces of a stem received in the recess.

A specific embodiment of the invention will now be described by way of example and with reference to the accompanying drawings, in which:-

Figures 1A and 1B are a side elevation and end elevation of a blind bolt of standard configuration;

Figures 2A and 2B are a side elevation and an end elevation of a blind bolt having a reduced stem diameter;

Figures 3A and 3B (which are on a reduced scale) are an axial section and an end elevation on the arrow 3B of Figure 3A of a fastener installation tool according to the invention which will instal both of the blind bolts of Figures 1A and 1B and Figures 2A and 2B;

Figures 4 and 5 are axial sections (similar to part of Figure 3A) showing the initial and final configurations when installing the fastener of Figures 1A and 1B; and

Figures 6 and 7 are similar to Figures 4 and 5 respectively but show the fastener of Figures 2A and 2B.

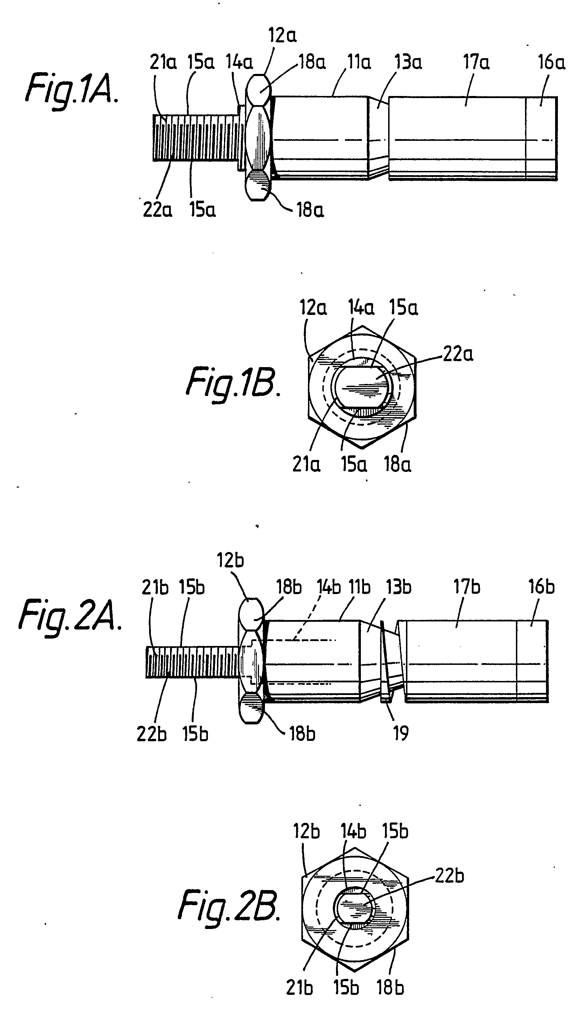

The fastener illustrated in Figures 1A and 1B is widely available under the Registered Trade Mark JO-BOLT. It is made of steel and comprises a tubular body 11a having a hexagonal head 12a at one end and a tapered nose 13a at the other end, the flats 18a of the hexagonal body head acting as wrenching faces. The body is internally threaded and in threaded engagement with a bolt 14a which has wrenching faces in the form of two opposed flats 15a on the tail end of the bolt which protrudes from the head 12a of the body. The two flats are joined at their edges by arcuate externally threaded faces 21a. The part of the bolt between the opposed flats is known as the nib 22a. The other end of the bolt is formed with a circular head 16a which is spaced apart from the nose 13a of the body. Assembled on the bolt stem, between the bolt head 16a and the body nose taper 13a, is a deformable tubular sleeve 17a. The thread on the bolt 14a is left-handed, so that when a rotary installation tool with a clockwise rotating shaft is used, the bolt 14a is screwed further into the body to bring the stem head 16a towards the body nose 13a.

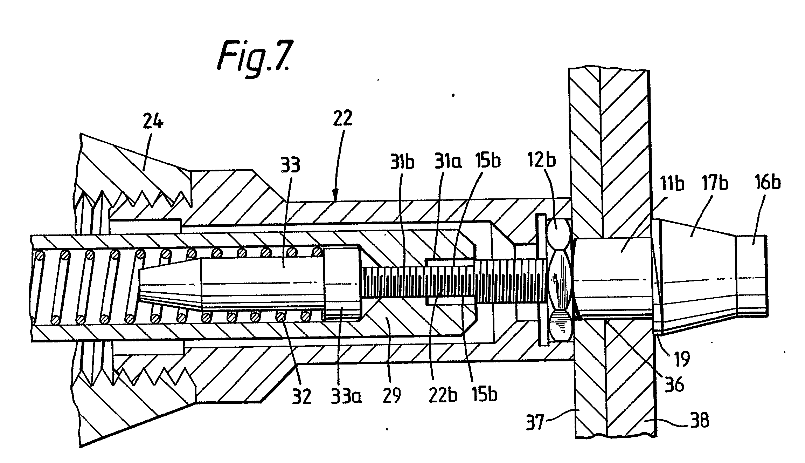

The alternative fastener illustrated in Figures 2A and 2B is generally similar to that illustrated in Figures 1A and 1B, like parts being indicated by like reference numerals with the subsitution of the suffix b for the suffix a. It is available under Registered Trade Mark COMP-TITE. It has the same outside body diameter and body wrenching flats configuration as the bolt of Figures 1A and 1B, but it will be seen that the diameter of the bolt 14b is substantially less than the diameter of the bolt 14a. The reason is as follows. The blind bolt of Figures 2A and 2B is intended specifically for use in applications where the rear sheet (i.e. the sheet on the blind side) is of relatively soft material, for example carbon-fibre reinforced material. It provides, when installed, a larger area blind head in contact with the rear sheet. To this end it has an extra component in the form of an expandible spring washer 19, between the sleeve 17b and the body taper 13b, which is expanded over the taper 13b and provides the bearing surface of the blind head against the rear sheet, as illustrated in Figure 7. Since the outside diameter of the washer 19 cannot be greater than that of the body 11b, sufficient area of the washer face can be achieved only by reducing its internal diameter, which requires a substantial reduction in diameter of the bolt 13b on which the washer is assembled.

Such a reduction in the diameter of the bolt also requires a reduction in the diametral spacing between the wrenching flats on the bolt stem. The relationship between this diametral spacing, and the diameter of the bolt, must be such that the flats have sufficient width to allow the efficient transmission of torque from the installation tool through them, whilst at the same time the nib between the wrenching flats is sufficiently strong to support that torque.

These differences in stem diameter and diametral spacing of the flats are clear from a comparison of Figures 1B and 2B. It will also be apparent that a driving socket of a cross-sectional configuration to receive and drivingly engage the larger nib 21a could receive the smaller nib 21b but would have its driving faces too far apart to engage the wrenching flats 15b, and that a driving socket of a cross-sectional configuration to receive and drivingly engage the smaller nib 21b would be far too small to receive the larger nib 21a.

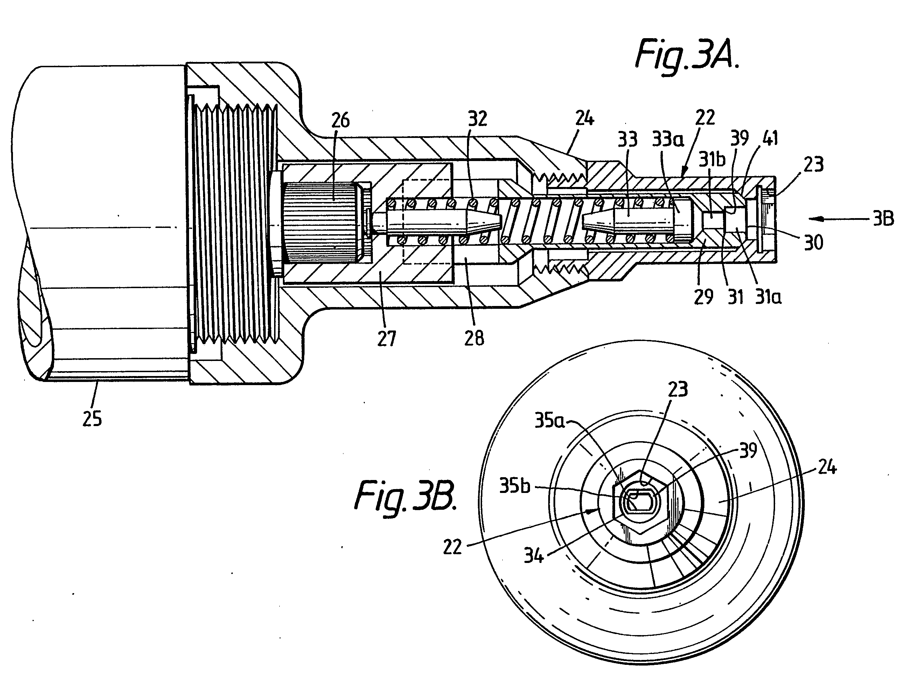

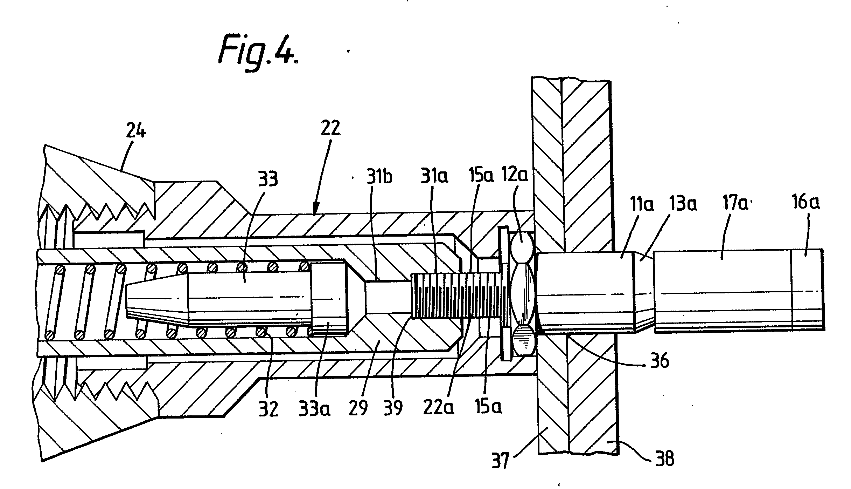

The installation apparatus of this example is illustrated in Figures 3A and 3B, and its manner of use to instal the two different fasteners is illustrated in Figures 4, 5, 6, and 7. It is in the form of a hand-held air-operated rotary installation tool. It includes a nose piece 22 comprising a radially outer part in the form of a rotationally fixed hexagonal socket 23 for engaging the hexagonal wrenching faces 18a and 18b of both varieties of blind bolt. The hexagonal socket 23 is formed at the front end of a barrel 24 secured to the casing of the air tool 25. The drive spindle 26 of the tool is fitted with an adaptor 27 which rotationally drives, through a sliding dog arrangement 28, the radially inner part or wrench 29 of the nose piece. The wrench 29 is spring urged forwardly against a bevelled flange 41 at the front end of the barrel 24, by means of a helical compression spring 32 which acts between the adaptor 27 and a headed pin 33 inside the wrench 29. The head 33a of the pin 33 bears against an internal flange in the wrench.

The front end of the wrench includes a recess 31 which comprises an outer part 31a and an inner part 31b. It is formed with two sets of driving faces. The first set of faces 35a are appropriate in length and spacing to receive and drivingly engage with the wrenching faces 15a of the larger bolt stem. The second set of faces 35b are appropriate in length and spacing to receive and drivingly engage with the wrenching faces 15b of the smaller bolt stem. The second set of faces 35b are axially behind the first set, i.e. further away from the entrance 30 of the socket through which, in use of the tool, the nib of a bolt will enter. The two driving faces of each set are joined together at their edges by arcuate faces which are a clearance around the externally threaded arcuate faces of a stem nib received in the appropriate part of the recess.

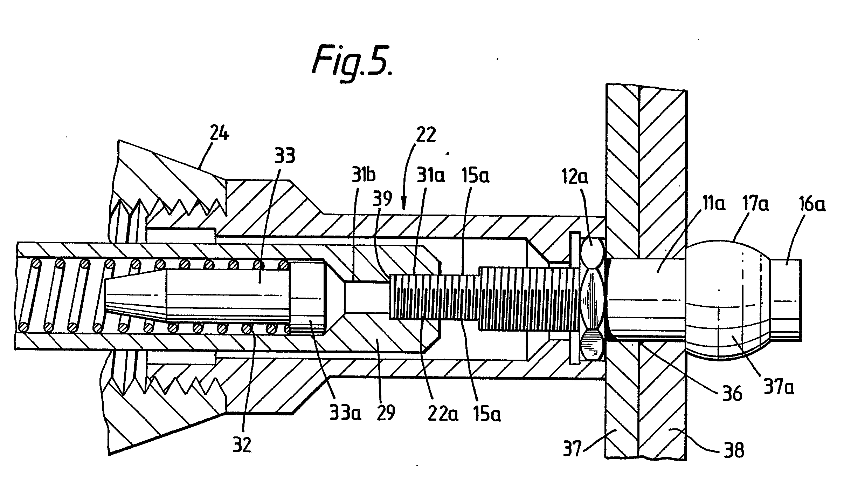

Figures 4 and 5 show how the tool is used to instal the bolt of Figures 1A and 1B which has the larger stem. The bolt is inserted through a hole 36 in two panels 37, 38 which are to be joined, until the body head 12a abuts the front panel 37. The tool is then offered up to the bolt, so that the hexagonal socket 23 engages with the faces 15a on the bolt body head. The projecting nib 22a of the bolt will attempt to enter the socket 31 through the entrance 30, but the annular orientation of the socket will probably not be correct for this. The end of the nib will engage the end of the socket 29 and push it back against the spring 32. As soon as the tool motor is started, the socket 29 will rotate to the correct position and spring forwards, under the urging of spring 32, to receive and engage with the end of the nib, as illustrated in Figure 4. The end part of the nib 22a is received in the socket 31a, with the shoulder 39 at the inner end of the outer socket in contact with the end wall of the nib.

The inner rotable socket 29 continues to rotate with respect to the fixed outer socket 23, rotating the bolt stem 14a with respect to the body 11a so as to drive the stem head 16a towards the body head 12a, expanding the sleeve 17a over the tapered nose 13a until the fully installed position is reached as illustrated in Figure 5. The expanded sleeve forms a blind head 37a and the advance of the bolt stem 14a has been accomodated by retraction of the socket 29 against the spring 32. The projecting part of the bolt stem is then broken off, to which end the stem may be formed with a weakened zone or breaker groove at a suitable position along its length.

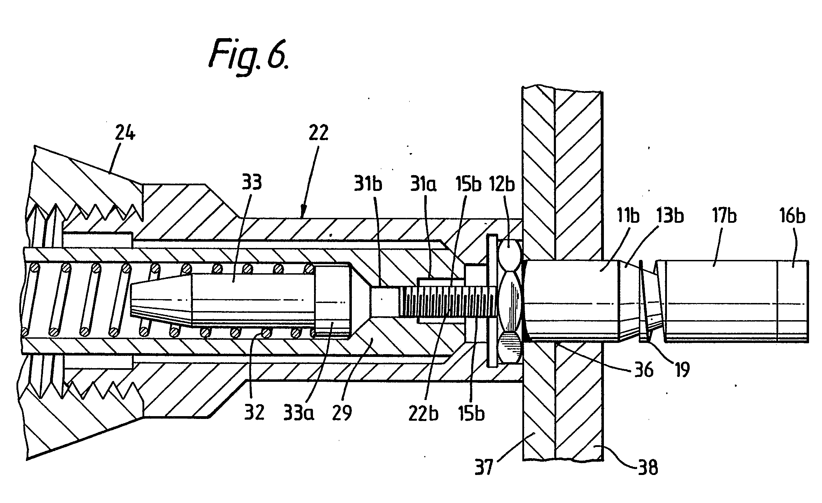

Similarly, Figures 6 and 7 illustrate the use of the same tool to instal the fastener of Figures 2A and 2B. In this case the end part of the nib 22b passes through the outer recess 31a without engaging the faces 35a, and enters (maybe after initial rotation of the socket) the inner recess 31b, so that the socket driving faces 35b engage the nib wrenching faces 15b. Continued rotation of the wrench instals the fasterner in a similar manner, with the washer 19 contacting the rear panel. Advance of the bolt stem 14b is accommodated by retraction of the pin 33 against spring 32. The rotatable wrench 29 may be able to float axially, but the inner socket 31b always stays in driving engagement with the faces 15b of the end part of the nib which advances through it.

Thus the same installation tool can instal both varieties of fastener.

The invention is not restricted to the details of the foregoing example.

For instance, in the two example bolts illustrated, the initial projecting length of the wider bolt is shown in Figures 1A and 4 as shorter than the initial projecting length of the narrow bolt in Figures 2A and 6. If however the projecting length of the wider bolt is longer, this is accomodated by initial rearward movement of the socket 29 against the spring 32.

The wrenching faces in the sockets of the tool may be provided in other configurations suitable to match these on the body and stem of the fastener. For example, the rotatable socket may be provided with wrenching faces on a collet which can be tightened to grip the bolt stem, on which the wrenching faces may be provided as a cylindrical surface, possibly on a separate sleeve secured to the bolt.

The fastener body head may be provided with wrenching faces on a separate member in contact with the body, e.g. a nut screwed on to the bolt and in frictional engagement with the body. The wrenching surfaces on it may be a cylindrical surface for engagement by a suitable collet or other arrangement of faces on the fixed socket of the installation tool.

## Claims

1. Apparatus for installing fasteners of the type comprising a body and a stem, the stem being provided with wrenching faces spaced apart across the stem and by which it can be driven to rotate with respect to the body thereby to instal the fastener, which apparatus comprises:-
a radially outer part (23) for engaging the body of a fastener to be installed;
and a radially inner part (29), rotatable with respect to the outer part, and including a recess (31) formed with driving faces spaced apart across the recess to drivingly engage with the wrenching faces of a fastener stem received within the recess; characterised in that the recess (31) is formed with a plurality of sets (35a, 35b) of driving faces, the driving faces of each set (35a, 35b) being spaced apart from each other across the recess by a distance which decreases as the distance of the set of driving faces from the entrance (30) to the recess (31) increases, whereby the same installation apparatus can drivingly engage with a plurality of fasteners having wrenching faces on their stems which are spaced apart across the stem by respectively different distances.

2. Apparatus as claimed in claim 1, further characterised in that the radially inner part (29) of the apparatus is axially movable with respect to the radially outer part (23).

3. Apparatus as claimed in claim 2, further characterised in that the radially inner part (29) is urged (32) axially towards the stem of a fastener to be received in its recess (31).

4. Apparatus as claimed in any of the preceding claims, for installing fasteners in which the stem is externally threaded and carries wrenching faces in the form of a pair of opposed parallel flats joined at their edges by arcuate faces which are externally threaded, further characterised in that each set (35a, 35b) of driving faces comprises two opposed parallel flats, the flats being joined at their edges by faces which are a clearance around the aforesaid externally threaded arcuate faces of a stem received in the recess.

Fig.1A.

Fig.1B.

Fig.2A.

Fig.2B.

Fig.3A.

Fig.3B.

EP 0 308 144 A1

Fig.4.

*Fig.5.*

EP 0 308 144 A1

Fig.6.

Fig.7.

EP 0 308 144 A1

European Patent
Office

**EUROPEAN SEARCH REPORT**

Application number

| | DOCUMENTS CONSIDERED TO BE RELEVANT | | EP 88308353.7 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | <u>US - A - 3 128 655</u> (KEASLER)<br>    * Fig. 2 *<br>       ---- | 1 | B 25 B 21/00<br>B 21 J 15/26 |
| | | | **TECHNICAL FIELDS SEARCHED (Int. Cl.4)**<br><br>B 25 B 21/00<br>B 25 B 28/00<br>B 21 J 15/00 |

The present search report has been drawn up for all claims

| Place of search | Date of completion of the search | Examiner |
|---|---|---|
| VIENNA | 16-11-1988 | BENCZE |